# EUROPÄISCHE PATENTSCHRIFT

(11) **EP 0 408 085 B1**
(45) Veröffentlichungstag und Bekanntmachung des Hinweises auf die Patenterteilung: **17.05.1995**
(21) Anmeldenummer: 90114969.0
(22) Anmeldetag: 17.08.1984
(51) Int. Cl.: C08F 10/14, C09D 123/20, C09J 7/02, C08F 283/12, C08F 283/01, B05D 5/08, C04B 41/46, C08K 5/01, D06M 13/03, D06M 15/263, D06M 15/227

(54) **Hydrophobe und/oder abhäsive Masse, reaktive Verdünner, Weichmacher und deren Verwendung**
Hydrophobic and/or abhesive mass, reactive diluent, plasticizer and their use
Masse hydrophobe et abhésive, diluant réactif, plastifiant et leur utilisation

(30) Priorität: 18.08.1983 DE 3329877
(43) Veröffentlichungstag der Anmeldung: 16.01.1991
(62) Teilanmeldung aus: 84903165.3
(73) Patentinhaber: Hinterwaldner, Rudolf, 81505 München (DE)
(72) Erfinder: Hinterwaldner, Rudolf, 81505 München (DE)
(74) Vertreter: TER MEER STEINMEISTER & PARTNER GbR

(56) Entgegenhaltungen:
- EP-A- 0 006 705
- DE-B- 2 917 779
- FR-A- 1 345 108
- FR-A- 2 396 782
- FR-A- 2 405 985
- GB-A- 1 347 954
- US-A- 2 340 109
- US-A- 3 249 581
- US-A- 3 328 482
- US-A- 4 154 714
- US-A- 4 250 300

## Beschreibung

Die Erfindung betrifft eine hydrophobe und/oder abhäsive Masse auf anorganischer, metallorganischer und/oder organischer Grundlage, reaktive Verdünner und Weichmacher mit einem Gehalt an methylgruppenreichen Kohlenwasserstoffen, die durch ihre hydrophoben und/oder abhäsiven Eigenschaften gekennzeichnet sind. Sie können in vielen Anwendungsbereichen unter sehr wirtschaftlichen Bedingungen als Werkstoffe, Beschichtungs- und Imprägniermittel, Film- und Folienmaterial, reaktive Verdünner, Weichmacher und zur Schaffung einer sauerstoffarmen Reaktionsumwelt verwendet werden.

In der Technik spielen die hydrophoben und/oder abhäsiven Ausrüstungen von Werkstoffen, Oberflächen und dergleichen volkswirtschaftlich eine bedeutsame Rolle. Mit der hydrophoben und damit der wasserabstoßenden Ausrüstung möchte man die Oberflächen wirksam gegen Wasser und jede Art von Korrosion schützen. In manchen Anwendungsfällen wird zusätzlich neben einer ausreichenden Hydrophobie noch eine volle Atmungsaktivität des Werkstoffes und Substrates gefordert. Bei den abhäsiven Ausrüstungen dagegen will man Oberflächeneigenschaften erzielen, auf denen keine adhäsiven Stoffe fest hatten und sich rückstandsfrei wieder entfernen lassen. Sie haben insbesondere als Trennbeschichtungen für Trennsubstrate in der Klebefolien- und Klebebandherstellung eine besondere Bedeutung erlangt.

Zur hydrophoben und/oder abhäsiven Ausrüstung von Massen sind in der Literatur eine Vielzahl von Stoffen beschrieben, die diese Funktionen in unterschiedlichem Maße erfüllen und vielfach zusätzlich werkstoffabhängig sind. Als hydrophobe und partiell auch abhäsive Stoffe werden nach dem heutigen Stand der Technik u.a. fettartige Substanzen, wie z.B. Paraffin, Wachs, Metallseifen; Aluminiumverbindungen, wie z.B. Aluminiumsulfat, -acetat und -formiat; hochmolekulare Alkylpyridiniumverbindungen, Alkylisocyanate, substituierte Äthylenharnstoffe, komplexe Chromverbindungen und Silikone eingesetzt. Sie müssen überwiegend in inerten Lösungsmitteln gelöst werden, damit sie applizierbar sind.
Die Lösungsmittel verdampfen nach der Verarbeitung und belasten vielfach negativ die Umwelt. In der abhäsiven Ausrüstung von Oberflächen wurden die fettartigen Substanzen, wie z.B. Paraffin, Wachs und Metallseifen, weitgehendst durch die teuren Silikontrennmittel ersetzt, weil ihre Trenneigenschaften nicht mehr den hohen technischen Anforderungen entsprachen.

Trotz einiger guter Eigenschaften befriedigen die neueren hydrophoben und/oder abhäsiven Stoffe auf der Grundlage von Polyorganosiloxanen nicht. Diese Tatsache ist u.a. darin zu suchen, daß sie vielfach noch als lösungsmittelhaltige Produkte verarbeitet werden müssen.

Sie benötigen oftmals hohe Vernetzungs- und Härtungstemperaturen. Bei den lösungsmittelhaltigen Produkten werden im Trocknungsverfahren die Lösungsmittel durch Verdampfen freigesetzt. Die Lösungsmitteldämpfe werden entweder an die Umwelt abgegeben oder in relativ teueren Rückgewinnungsverfahren zurückgewonnen. Da Silikone um ein Vielfaches teurer sind als vorstehend erwähnte konventionelle Stoffe, lassen sie sich aus Wirtschaftlichkeitsgründen nicht immer in den notwendigen Gehalten einsetzen, um die geforderte Hydrophobie und Abhäsion in einer Masse zu erzielen.

Bei den hydrophoben und/oder abhäsiven Produkten, die bei höheren Temperaturen vernetzen und härten, können thermosensible Werkstoffe und Substrate nicht damit ausgerüstet werden. Durch die Wärmebelastung verändern sie ihre ursprüngliche Form und Aggregatzustände. Bei feuchtigkeitshaltigen Werkstoffen und Substraten, wie z.B. bei cellulosehaltigen Materialien, flächigen Papierbahnen, ist zwar eine kurzfristige, thermische Belastung möglich, jedoch müssen sie anschließend mit Wasserdampfaerosole wiederbefeuchtet werden, um ihre ursprünglichen Eigenschaften, z.B. die Planlage, annähernd wieder zu erlangen. Diese Wiederbefeuchtungstechnologie ist nicht nur teuer und energieaufwendig, sondern fachlich sehr umstritten.

Die Funktionalität, auf der die Hydrophobie und Abhäsion u.a. beruht, ist in der Literatur ausführlich beschrieben. Entscheidend dabei ist nicht allein Unpolarität in der Kettenverzweigung pro Moleküleinheit, sondern zusätzlich ein möglichst hoher Gehalt an unpolaren Methylgruppen. Gerade dieser Gehalt an unpolaren Methylengruppen ist ausschlaggebend für den Grad der Hydrophobie und der Abhäsion einer Masse. Die Funktionalität Hydrophobie und Abhäsion läßt sich u.a. schematisch durch den sogenannten "Bürsteneffekt" an einer Dimethyl-Silikonverbindung darstellen: 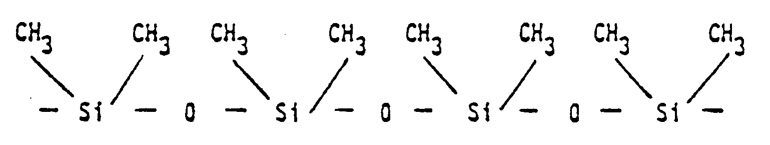
Anhand dieser schematischen Darstellung wird dem Fachmann aber auch deutlich, daß infolge der vorgegebenen Atomgruppierung in Polydimethylsiloxanen der Gehalt an den entscheidenden Methylgruppen in der Kettenverzweigung pro Si-O-Einheit auf 2,0 Mol beschränkt ist.

Es hat nun nicht an Bemühungen gefehlt, die Kosten bei der hydrophoben und/oder abhäsiven Ausrüstung von Massen durch bessere wirtschaftlichere Lösungen zu senken. Diese Aufgabe scheiterte jedoch vor allem daran, daß einerseits der Methylgruppengehalt in der Kettenverzweigung einer Verbindung nicht ohne weiteres erhöht werden konnte und andererseits solche methylgruppenreichere Stoffe nicht allgemein wirtschaftlich zugänglich waren.

In der abhäsiven Ausrüstung von Trennpapieren und -folien, die zur Abdeckung von selbstklebenden Materialien eingesetzt werden, besteht schon lange die Forderung nach graduell abgestuften Trenneigenschaften. Diese graduelle Abstufung scheiterte u.a. bislang daran, daß einerseits der unpolare Methylgruppengehalt in einer Verbindung nicht auf technisch-wirtschaftliche Weise erhöht und andererseits keine gleichmäßige statistische Methylgruppenverteilung im Molekül erzielt werden konnte.

Beim freiradikalischen Polymerisieren, Härten bzw` Vernetzen von ungesättigten Verbindungen, wie Polyester-, Acryl- und Methacrylharzen, inhibiert der molekulare Luftsauerstoff die Reaktionen an den Oberflächen. Der Luftsauerstoff macht dabei die Radikale unwirksam, wodurch die Härtungsreaktion unterbunden wird und die Oberfläche klebrig bleibt. Man versuchte, die Oberfläche vor dem Luftsauerstoff dadurch zu schützen, indem man sie mit Folien, Glasplatten und dergleichen abdeckte. Da dies für den praktischen Einsatz jedoch viel zu umständlich war, wurde ein Paraffinzusatz (DE-PS 948 818) vorgeschlagen. Das Paraffin schwimmt während der Härtung an die Oberfläche aus und bildet dort eine Schutzschicht gegenüber dem Luftsauerstoff. Aber aus dem Paraffinzusatz erwächst manches Problem. Diese Probleme sind u`a., daß Paraffin in den härtbaren Massen bei niedrigen Temperaturen auskristallisiert und bei hohen Temperaturen nicht mehr ausgeschieden wird. Ebenfalls aus den Eigenschaften des Paraffins erklärt sich, daß eine Härtung paraffinhaltiger Massen bei zu hohen Temperaturen nicht möglich ist. Somit lassen sich mit paraffinhaltigen härtbaren Massen keine kurzen Reaktionszeiten bei erhöhter Temperatur erreichen, weil man erst erwärmen darf, wenn das Paraffin vollständig ausgeschwommen ist. Da aber paraffinhaltige härtbare Massen ausgezeichnet schleifbar sind, wartet die Industrie schon lange auf verbesserte Lösungen.

Aus der US-A-3 328 482 sind Trennmittel bekannt, die ein Polyorganosiloxan und ein polymeres Material enthalten, welches im wesentlichen aus Isobutylen-Einheiten besteht und ein Molekulargewicht von mehr als 400 besitzt.

Die FR-A-2 405 985 beschreibt härtbare Fugendichtmassen auf der Grundlage eines Polyorganosiloxans und eines Polybutylens mit einem Molekulargewicht zwischen 800 und 1.500.

Ziel und Aufgabe der vorliegenden Erfindung war es, anorganische, metallorganische und/oder organische Massen sowie reaktive Verdünner und Weichmacher bereitzustellen, deren hydrophobe und/oder abhäsive Eigenschaften im Vergleich zu konventionellen Produkten technisch gezielt verbessert und vor allem wirtschaftlicher sind. Gleichzeitig sollen damit die vorstehenden Nachteile überwunden werden.

Es wurde nun überraschenderweise gefunden, daß bei spezifischen Fraktionsschnitten in der petrochemischen Aufbereitung von Erdöl in der Kettenverzweigung methylgruppenreiche Monomere der allgemeinen Formel 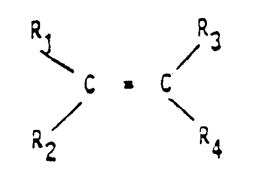
worin R₁, R₂, R₃ und R₄ ein Wasserstoffatom, ein Methyl- und/oder Ethylradikal bedeuten, anfallen. Sie bestehen überwiegend aus Gemischen mit folgenden Olefintypen: 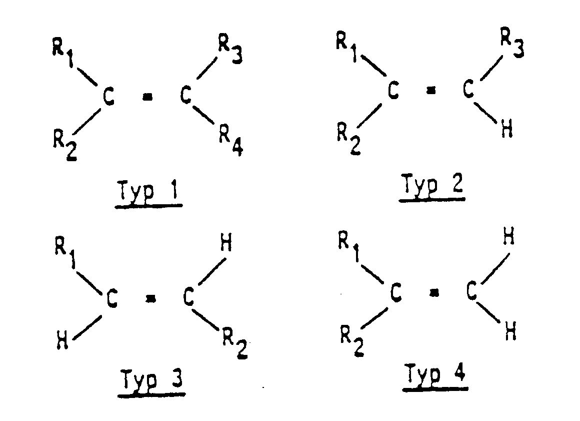
worin R₁, R₂, R₃ und R₄ die vorstehende Bedeutung haben. Die Gehalte an Typ 1 und 2 sind zusammen mindestens 40 %. Durch fraktionierte Trennungs- bzw. Destillationsverfahren lassen sich gegebenenfalls die einzelnen Olefintypen in einem relativ hohen Reinheitsgrad wirtschaftlich gewinnen.

Diese Monomere besitzen in der Kettenverzweigung mindestens 2,0, vorzugsweise 3,0 bis 4,0 Methylgruppen pro Molekül und lassen sich infolge der C = C-Doppelbindung polymerisieren, äthoxylieren und weiterhin mit einer Vielzahl von funktionellen Gruppen umsetzen bzw. umwandeln.

Es hat sich nunmehr überraschenderweise gezeigt, daß durch Kombination einer metallorganischen Verbindung des Siliciums mit einer solchen monomeren, oligomeren und/oder polymeren methylgruppenreichen Kohlenwasserstoffverbindung, die pro Monomer oder Monomereinheit 3,0 bis 4,0 Methylgruppen aufweist, besonders gute hydrophobe und/oder abhäsive Eigenschaften erzielt werden können.

Gegenstand der Erfindung sind daher hydrophobe und/oder abhäsive Massen auf anorganischer, metallorganischer und/oder organischer Grundlage, reaktive Verdünner und Weichmacher, die gekennzeichnet sind durch einen Gehalt an einer monomeren, oligomeren und/oder polymeren methylgruppenreichen Kohlenwasserstoffverbindung und/oder deren Derivaten der allgemeinen Formeln I, II und/oder III 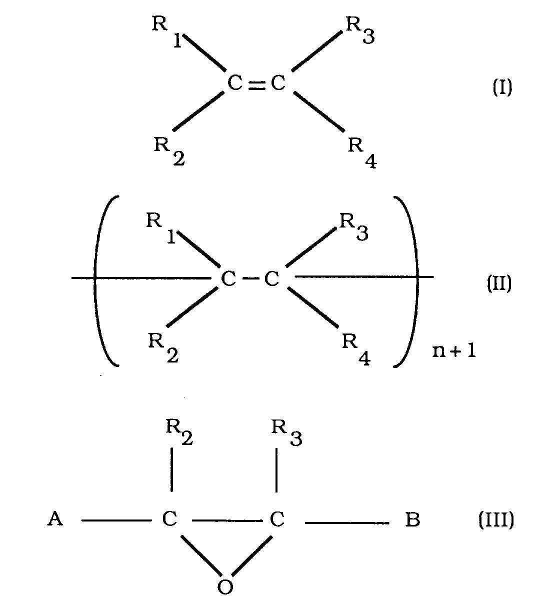
worin
R₁, R₂, R₃ und R₄ Wasserstoffatome, CH₃-Gruppen und/oder C₂H₅-Gruppen, A und B Wasserstoffatome, CH₃-Gruppen und/oder C₂H₅-Gruppen und/oder Reste der allgemeinen Formel (II) und
n eine ganze Zahl mit einem Wert zwischen 0 und 20.000.000, vorzugsweise 50 bis 1.000.000, insbesondere 50 bis 500.000 enthält
mit der Maßgabe bedeuten, daß der Methylgruppengehalt 3,0 bis 4,0 pro Monomer oder Monomereinheit beträgt; und
an einer metallorganischen Verbindung des Siliciums, wobei das Verhältnis von metallorganischer Verbindung des Siliciums zur Kohlenwasserstoffverbindung 99 : 1 bis 1 : 99 beträgt.

Die erfindundungsgemäß verwendeten methylgruppenreichen Kohlenwasserstoffe gemäß Formel I sind aliphatische Verbindungen mit einer ungesättigten Doppelbindung und einem Methylgruppengehalt von 3,0 bis 4,0 pro Molekül. Vertreter dieser Gruppen sind 2-Methylbuten-1, 3-Methylbuten-2, 2,3-Dimethylbuten-1, 2,3-Dimethylbuten-2 und 2,3-Dimethylpenten-2.

Werden die monomeren Olefintypen nach bekannten Verfahren miteinander oder untereinander dimerisiert, oligomerisiert oder polymerisiert, entstehen flüssige bis feste Produkte mit unterschiedlichen Molekulargewichten, jedoch mit definierbaren Gehalten an unpolaren Methylgruppen in der Kettenverzweigung. Die festen homopolymeren Olefinpolymerisate besitzen "wachsartige" Eigenschaften, deren Schmelzpunkte in Abhängigkeit des Polymerisationsgrades in Temperaturbereichen zwischen 40 und 250°C liegen und Molekulargewichte bis zu 20 x 10⁶, vorzugsweise 50 bis 1.000.000, insbesondere 50 bis 500.000 aufweisen können.

Die erfindungsgemäß eingesetzten methylgruppenreichen Kohlenwasserstoffe und deren Derivate gemäß Formel II - nachfolgend als "die eingesetzten Kohlenwasserstoffe" bezeichnet - sind Alkene, Cycloalkene, Arylalkene, offenkettige und cyclische Polyene. Sie werden nach bekannten Verfahren über Dimerisation, Mischdimerisation, Oligomerisation, Mischoligomerisation, Polymerisation, Copolymerisation, Polykondensation und/oder Polyaddition mit mindestens einer der methylgruppenreichen Verbindungen der Formel 1 und/oder 3 gewonnen. Die Dimerisation, Oligomerisation und/oder Polymerisation solcher Verbindungen sind in der Literatur (u.a. Houben-Weyl Band V/1a und 1b, 1972) ausführlich beschrieben. Hierauf wird im Rahmen der vorliegenden Erfindung kein Schutz begehrt. So kann z.B. die Oligomerisation und/oder Mischoligomerisation mit kationischen und anionischen Katalysatoren, Koordinationskatalysatoren, aber auch thermisch oder photochemisch erfolgen.

Bei den eingesetzten dimeren, oligomeren, polymeren und/oder copolymeren Verbindungen aus Formel 1 handelt es sich vorzugsweise um β-Olefine mit mindestens einer C-C-Doppelbindung. Zu den dimeren und oligomeren Verbindungen gehören u.a. beispielsweise folgende: 2,4,4-Trimethylpenten-1; 2,4,4-Trimethylpenten-2; 2,2,4,6,6-Pentamethylhepten-3; 2,2,4,6,6-Pentamethylhepten-2; 2,3,4,4,5,5,6,6,7,7,8,8,9,9,10,10,11-Heptadecanmethyldodecen-2; 2,4,4,6,6,8,8-Heptamethylnonen-2; 2,2,4,4,6,6,8,8,10-Nonamethylundecen-2; 2,2,4,6,6-Pentamethylhepten-1; 2,3,4,4,5,5,6,7-Octamethyloctadien-2,7.
Die eingesetzten oligomeren Kohlenwasserstoffverbindungen können aber auch Gemische bzw. Mischoligomere sein. Sie haben im allgemeinen eine Kohlenstoffzahl zwischen 10 und 50 und ihre Flammpunkte sind >100° C, insbesondere zwischen 105 und 250° C. Die Kettenverzweigung beträgt2.0, insbesondere 3,0 bis 4,0 Mol Methylengruppen pro monomerem Olefintyp gemäß Formel 1. Ein typischer Vertreter dieser Gruppe ist u.a. nachstehender mit folgenden chemischen und physikalischen Daten:

| | | |
|---|---|---|
| Olefintypen: | 2,3-Dimethylbuten-2 | Anteil ca. 30-40% |
| | 3-Methylbuten-2 | Anteil ca. 40-50% |
| | Buten-2 | Anteil ca. 10-20% |
| | 2-Methylpropen-1 | Anteil ca. 1-10% |
| C-Zahl: | C₁₄ - C₂₀ | |
| Kettenverzweigung; | 3,5 bis 4 Methylgruppen/Molekül | |
| Siedeverlauf (DIN 51751): | 255° C Siedebeginn | |
| | 259° C 10 % | |
| | 263° C 50 % | |
| | 264° C 70 % | |
| | 268° C 90 % | |
| | 270° C 95 % | |
| | 279° C Siedeende | |

Die Viskosität beträgt bei 50° C ca. 3.5 mm²/s und der Flammpunkt liegt bei > 110° C. Diese Verbindung enthält mindestens eine C-C-Doppelbindung.

Die eingesetzten monomeren Olefintypen können mit anderen Comonomeren *) dimerisiert, oligomerisiert und mit unterschiedlichen Polymerisationsgraden polymerisiert werden. Die Herstellung dieser eingesetzten dimeren, oligomeren und/oder polymeren Homo- und/oder Copolymere erfolgt jeweils nach den bekannten und geeigneten Polymerisations-, Polykondensations- und/oder Polyadditionsverfahren. Dasselbe gilt für die Umwandlung solcher Verbindungen mit funktionellen Gruppen, wie z.B. durch Additionsreaktionen, die in der Literatur hinreichend beschrieben sind (u.a. Houben-Weyl, Band V 1b,1972). Die Dimerisation, Oligomerisation und Polymerisation der eingesetzten Olefintypen der Formel 1 mit anderen Comonomeren kann dabei so durchgeführt werden, daß mindestens eine, vorzugsweise zwei und mehr C = C-Doppelbindungen pro Molekül enthalten sind. Dies ist auch wiederum bedeutsam für die Anzahl der pro Molekül einzuführenden Epoxidgruppen. Für diese Verfahren wird im Rahmen der vorliegenden Anmeldung kein Schutz begehrt.
*) Unter Comonomeren werden alle die Verbindungen -unabhängig von ihrem Molekulargewicht- verstanden, die polymerisierbar sind.

Von allgemeinem technischen und wirtschaftlichen Interesse gemäß vorliegender Erfindung, sind auch die dimeren, oligomeren und/oder polymeren Verbindungen, die einen Gehalt von mindestens einem Mol einer oder mehrere der eingesetzten Kohlenwasserstoffe aufweisen.

Über diesen Gehalt kann nicht nur die Reaktivität einerseits und die Wirtschaftlichkeit andererseits, sondern auch die hydrophoben, abhäsiven und/oder weichmachenden Eigenschaften eines der Endprodukte graduell beeinflußt werden.

Eine Sonderstellung nehmen die epoxidierten Monomere, Oligomere und Polymere der eingesetzten Kohlenwasserstofftypen ein. Durch die Einführung von mindestens einer epoxidfunktionellen Gruppe lassen sich die eingesetzten methylgruppenreichen Kohlenwasserstoffe auch mit Verbindungen, die aktive Wasserstoffatome enthalten, wie z.B. Amine, Imine, Amide, ein- und mehrbasische Säuren und deren Anhydride, umsetzen und gegebenenfalls polyaddieren.

Im Mittelpunkt dabei stehen nicht nur die bekannten Härtungs- und Vernetzungsreaktionen mit Epoxiden, sondern auch die Einführung von weiteren ungesättigten Gruppen, wie z.B. C = C-Doppelbindungen. Besondere Bedeutung kommt u.a. der Einführung von Acryl- und Methacrylgruppierungen zu, weil damit neue Derivate entstehen, die besonders gute Reaktivitäten bei der freiradikalischen Polymerisation mit z.B. Peroxiden, Strahlen und dergleichen besitzen.

Die Epoxidierung der eingesetzten Kohlenwasserstofftypen und deren Derivaten gemäß Formel 1 und 2 kann durch Oxidation mit Persäuren, wie Perbenzoesäure, aber auch durch Wasserstoffperoxid, tert. Butylhydroperoxid und dergleichen erfolgen (Siehe u.a. Houben-Weyl, Band VI/3, 1965).
Als Beispiel seien genannt: 2,3-Epoxy-2,3-Dimethylbutan; 5,6-Epoxy-2,2,5-Trimethylhexan; 2,3;4,5-Diepoxy-2,3,4,5-Tetramethylhexan; 1,2;5,6-Diepoxy-6-Methylheptan; 5,6-Epoxy-2,2,5-Trimethylhexen; 3,4-Epoxy-2,3,4-Trimethylpentanal; 2,3;6,7-Diepoxy-2,3,4,5,6,7-Hexamethylocten; 2,3;6,7-Diepoxy-2,3,4,4,5,5;6,7-Octamethyloctan.

Ein weiteres Ziel vorliegender Erfindung ist der Einsatz der eingesetzten Verbindungen als Verdünner, Lösemittel und Weichmacher in anorganischen, metallorganischen und/oder organischen Massen.

Eine besondere Bedeutung kommt dabei erfindungsgemäß den reaktiven eingesetzten Kohlenwasserstofftypen und deren Derivaten zu. Sie können mit den monomeren und/oder oligomeren Kohlenwasserstofftypen allein oder in Kombination mit anderen reaktiven Verdünnern und Lösemitteln u.a. ungesättigte Polyesterharze, Acryl- und Methacrylverbindungen gelöst und verdünnt werden. Eine besondere Verträglichkeit besteht, wie überraschenderweise gefunden wurde, mit einer Vielzahl von Polyorganosiloxanen, wobei sie sowohl die Funktionen eines reaktiven Verdünners als auch eines reaktiven Weichmachers übernehmen. Werden sie beim freiradikalischen Vernetzen und Härten von ungesättigten Verbindungen, wie z.B. ungesättigte Polyesterharze, Acryl- und Methacrylverbindungen eingesetzt, so bilden die eingesetzten Kohlenwasserstoffe und ihre Derivate an der Oberfläche eine inerte Schutzschicht aus, die das Inhibieren der Reaktion durch den Luftsauerstoff reduziert und verhindert. Gleichzeitig werden sie chemisch mit in die Endproduktmatrix eingebunden. Da die flüssigen monomeren, oligomeren und polymeren Typen nicht kristallisieren, treten -im Gegensatz zu Paraffinzusätzen- während der Lagerung keine Probleme auf. Auch bei einer Härtung solcher Massen bei erhöhten Temperaturen orientieren sich die eingesetzten methylgruppenreichen Verbindungen rasch zur Oberfläche und bilden dabei schnell einen inerten Schutzfilm.

Die zum Einsatz gelangenden Oligomere und/oder Polymere können chemisch inert sein oder aber noch reaktive funktionelle Gruppen besitzen. Welche dieser Verbindungen eingesetzt werden, hängt vorzugsweise von den Formulierungen, den Verarbeitungsbedingungen und den zusätzlich geforderten Endeigenschaften ab. In einer reaktiven, härtbaren Masse wird man vorzugsweise solche Verbindungen einsetzen, die noch funktionelle Gruppen tragen, weil sie über diese chemisch in die Matrix des Endproduktes eingebunden werden.

Bei physikalisch härtenden Massen werden dagegen vorzugsweise nichtreaktive Verbindungen bevorzugt, damit sie keine zusätzlichen Angriffspunkte durch Umwelteinflüsse im Endprodukt beinhalten.

Die erfindungsgemäßen hydrophoben und/oder abhäsiven Massen, Verdünner und Weichmacher können auf anorganischer, metallorganischer und/oder organischer Grundlage aufgebaut sein. Sie können in flüssiger, pastöser, thixotroper, halbfester und/oder fester Form vorliegen.

Als monomere, oligomere bzw. polymere anorganische Verbindungen eignen sich u.a. hydraulisch abbindende Massen, Zemente, wie z. B. Portland-Tonerdeschmelz-Zement, Gips, Anhydrit, Magnesit, Kalk, Silikate, wie z. B. Wasserglas.

Zu den metallorganischen und/oder organischen Comonomeren gehören alle die Verbindungen, die zur Polymerisation, Polykondensation und/oder Polyaddition mit den eingesetzten methylgruppenreichen Kohlenwasserstoffen und deren Derivaten geeignet sind. Hierzu gehört auch die Pfropfpolymerisation. Die dabei überraschenderweise gefundene Polykondensation dürfte u.a. mit einer Allylumlagerung zu begründen sein.

Die erfindungsgemäßen Massen, Verdünner und/oder Weichmacher können
a) als copolymerisierbare Comonomere Alkene, Cycloalkene, Arylalkene, Polyene, Allene, Arene, Arine und noch bevorzugter allyl-, vinyl-, acryl- und/oder methacrylgruppenhaltige Verbindungen,
b) als aktive Wasserstoffatome tragende Verbindungen Amine, Amide, Amidoamine, Imine, Imide, ein- oder mehrbasige gesättigter und/oder ungesättigte Säuren bzw. deren Anhydride und/oder Siliciumwasserstoffverbindungen, und
c) als polykondensationsfähige, Hydroxylgruppen tragende Verbindungen ein- oder mehrwertige Alkohole, Mono-, Di- oder Polycarbonsäuren und deren Anhydride und/oder aliphatische oder aromatische Methylolverbindungen, enthalten.

Die Comonomeren für die radikalische, ionische, koordinative, strahlen- und photochemische Polymerisation mit den eingesetzten methylgruppenreichen Kohlenwasserstoffen und deren Derivaten können aus der Familie der ungesättigten Verbindungen ausgewählt werden. Hierzu eignen sich alle monomeren, oligomeren, polymeren und/oder copolymeren Verbindungen mit mindestens einer reaktionsfähigen C-C-Doppelbindung und/oder C-C-Dreifachbindung im Molekül, soweit sie mit den eingesetzten Verbindungen umsetzbar sind.
Solche Verbindungen sind u.a. unverzweigte, verzweigte und/oder substituierte Alkene, Cycloalkene, Arylalkene, offenkettige und cyclische Polyene, Allene, Kumulene, Arene, Arine und dgl. Die Substituenten bzw. charakteristischen Gruppen sind u.a. Hydroxyl-, Halogen-, Carboxyl-, Nitril-, Cyanat-, Amin-, Amid-, Imin-, Imid-, Sulfonyl-, Aldehyd-, Keton-, Keten-, Urethan-, Epoxidgruppen.
Die Verbindungen können ein- und/oder mehrere ungesättigte Gruppen enthalten. Vertreter dieser Gruppe sind u.a. Monomere, Oligomere und Polymere aus Ethylen, Propylen, Butylen, Isopren, Isobutylen, Butadien, Buten-(2)-diol-(1,4), Ethin, 3-Penten-1-in; Vinylacetat, Vinyllaurat, Crotonaldehyd, Vinylhalogenide, Vinylidenhalogenide; Styrol, α-Methylstyrol, Acenaphthylen; Acryl- und Methacrylsäure und deren Ester, Säureamide; vinyl-, acryl-, methacryl- und/oder allylgruppentragende Siloxane, Urethane und Epoxide; ein- und mehrfach ungesättigte Mono-, Di- und Polycarbonsäuren, deren Anhydride und Ester, wie z.B. Triallyltrimellitat; ungesättigte Polyesterharze, wie z.B. aus Maleinsäure und/oder Phthalsäure mit gesättigten und ungesättigten Glykolen.

Die Polymerisation der eingesetzten methylgruppenreichen Kohlenwasserstoffe und deren Derivate allein oder mit geeigneten Comonomeren kann in Substanz und in Lösung, aber auch in heterogener Phase als Emulsions-, Per-, Suspensions- und/oder Fällungspolymerisation erfolgen.

Für Pfropfreaktionen und/oder Quervernetzungen mit den eingesetzten methylgruppenreichen Kohlenwasserstoffen und deren Derivaten kommen als Polymere alle durch Radikalbildner vernetz- und/oder pfropfbaren polymeren oder copolymeren Verbindungen mit -CH₂-und/oder 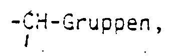
die auf synthetischem Wege erhalten wurden oder natürlicher Genese sind, sowie beliebige Mischungen derselben infrage. Solche Verbindungen sind z.B. Hoch- und Niederdruckpolyäthylen niederer und hoher Dichte, chloriertes und chlorsulfoniertes Polyäthylen, Polypropylen, Polyvinylchlorid, Polyvinylacetat, Polyacrylsäureester, Ethylen-Vinylacetat-Copolymer, Ethylen-Propylen-Copolymer, Ethylen-Propylen-Butylen-Copolymer, Vinylchlorid-Vinylacetat-Copolymer, Vinylchlorid-Vinylidenchlorid-Copolymer, Polyisopren (Naturkautschuk), Polybutadien, Polychloropren, synthetisches Polyisopren, Ethylen-Propylen-Ethylidennor-bornen, Butadien-Styrol-Copolymer, Butadien-Acrylnitril-Copolymer, Butadien-Styrol-Acrylnitril-Copolymer,Styrol-Isopren-Blockpolymer, Butylkautschuk, Silikonkautschuk, gesättigte Polyester, Polyamide, Polyurethane, Polyäther, Polyacetate.

Als Comonomere für Polykondensations- und Polyadditionsreaktionen sind alle metallorganischen und/oder organischen Verbindungen geeignet, die zu solchen Reaktionen mit den eingesetzten Kohlenwasserstofftypen und deren Derivaten geeignet sind. Die zur Polykondensation befähigten Comonomere tragen u.a. Hydroxyl-, Halogengruppen. Hierzu gehören u.a. ein-und mehrwertige Alkohole, wie z.B. Glykole, Glycerin, Trimethylolpropan, Pentaerythrit; Mono-, Di- und Polycarbonsäuren und deren Anhydride, wie z.B. Abietinsäure, Phthalsäure, Trimellithsäure; aliphatische und aromatische Methylolverbindungen, wie z.B. Methylolphenole, Methylolharnstoffe. Zur Polyaddition sind besonders die metallorganischen und/oder organischen Verbindungen geeignet, die reaktive Wasserstoffatome besitzen. Hierzu gehören u.a. Amide, Amine, Isocyanate, gesättigte und ungesättigte ein- und mehrbasische Carbonsäuren und deren Anhydride, Aldehyde Amidoamine, Juide und Juine. Die Polyadditionsreaktionen mit Comonomeren unterscheiden sich zwischen den Kohlenwasserstofftypen der Formel 1 und 2 von den Verbindungen der Formel 3. Bei den Verbindungen gemäß Formel 1 und 2 verläuft die Addition entweder nach der Markownikoffschen Regel oder bei der radikalischen Addition, z.B. unter Einfluß von Strahlen oder Katalysatoren, wie Peroxide, entgegen dieser Regel (auch Anti-Markownikoff-Addition genannt). Bei den epoxidierten Verbindungen gemäß Formel 3 erfolgt die Addition an der Epoxidgruppe.

Die Epoxidierung der eingesetzten Kohlenwasserstofftypen und deren Derivaten nach Formel 1 und 2 kann durch Oxidation mit Persäuren, wie Perbenzoesäure, aber auch durch Wasserstoffperoxid, tert. -Butylhydroperoxid erfolgen.

Die erfindungsgemäßen hydrophoben und/oder abhäsiven Massen, reaktiven Verdünner und Weichmacher enthalten eine metallorganische Verbindung des Siliciums, wobei das Verhältnis von metallorganischer Verbindung des Siliciums zu Kohlenwasserstoffverbindung 99:1 bis 1:99 beträgt. Mit den metallorganischen Verbindungen des Siliciums lassen sich Additionsreaktionen mit solchen Verbindungen durchführen, die noch Wasserstoffatome am Silicium enthalten. Hierbei unterscheidet man Reaktionen, die nach einem Radikalmechanismus, wie z.B. Peroxide, Strahlen, oder nach einem Radikal-/"Ionen"-Mechanismus ablaufen, sowie edelmetallkatalysierte Reaktionen, bei welchen in der Regel keine freien Radikale auftreten. Des weiteren können sie auch mit vinyl- und acrylgruppenhaltigen siliciumorganischen Verbindungen umgesetzt werden. Aber auch Kondensationsreaktionen bzw. kondensationsvernetzende Reaktionen sind die eingesetzten Kohlenwasserstofftypen und deren Derivate mit siliciumorganischen Verbindungen, wie überraschenderweise gefunden wurde, zugänglich.
Als Reaktionspartner eignen sich somit u.a. unverzweigte, verzweigte und/oder cyclische Silane, Silanole, Polysilane, Polyorganosiloxane, Polysilazane, Polysilthian, Polysilalkenyle, Polysilarylene, Polysilalkensiloxane, Polysilarylensiloxane, Polysilalkylensilane, Polysilarylensilane mit mindestens einer silicium- und/oder organofunktionellen Gruppe, wobei diese vorzugsweise

〉̶ SiH,

〉̶ Si-OH,

〉̶Si-Halogen,

〉̶ Si-SH, -CH = CH₂

und/oder 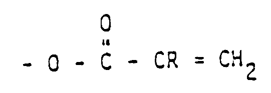
bedeuten,
worin Halogen = Chlor, Brom, Jod und/oder Fluor und R = H oder ein Alkylrest mit 1 bis 4 C-Atomen ist.

Bei viskosen siliciumorganischen Verbindungen können die eingesetzten Kohlenwasserstofftypen und deren Derivate zusätzlich die Funktion eines reaktiven Lösers. Verdünners und/oder Weichmachers übernehmen, ohne dabei die guten hydrophoben und/oder abhäsiven Eigenschaften zu verändern. In Abhängigkeit der Ausgangsviskositäten, der funktionellen Gruppen und den erforderlichen Applikationskonzentrationen können die Verhältnisse von siliciumorganischen Verbindungen zu den eingesetzten Kohlenwasserstofftypen und deren Derivaten im Verhältnis von 99 : 1 bis 1 : 99 betragen, wobei sie neben der Funktion als Reaktionspartner zusätzlich die eines Weichmachers und/oder Verdünners übernehmen.

Auch inerte organische Verbindungen können auf den eingesetzten Kohlenwasserstofftypen und deren Derivaten gelöst, verdünnt und/oder weichgemacht werden.

Zum Umsetzen der eingesetzten Kohlenwasserstofftypen und deren Derivaten eignen sich die bekannten Reaktionsinitiatoren für die einzelnen Polymerisations-, Polykondensations-, Polyadditions-, Vulkanisations- und/oder Pfropfpolymerisationssysteme, d.h. ganz allgemein reaktive Verbindungen, die Reaktionen initiieren können. Hierzu gehören neben den Comonomeren, u.a. Katalysatoren, wie Metallkomplexe, bekannte Initiatoren und Radikalbildner, wie Peroxide, Hydroperoxide, Persäuren, deren Derivate und Salze; Oxidationsmittel, wie Bleidioxid, Mangandioxid; Härter, wie z.B. Polyamine, Polyamidamine; Isocyanate und deren Derivate; Mercaptane und Mercaptoverbindungen. Auch Reaktionsbeschleuniger, die u.a. leicht Elektronen abgeben und dadurch Aufgaben, wie beschleunigter Peroxidzerfall, übernehmen können, zählen hierzu. Dies sind u.a. Schwermetallverbindungen, Amine, Amide, Imine, Imide, Mercaptane, Azokörper.

Die Umsetzungsreaktionen können aber auch photochemisch mit Photoinitiatoren und ultravioletter Strahlung; mit ionisierenden Strahlen, wie Gamma-, Röntgen-, Elektronen-, Ionenstrahlen; Infrarot- bzw. emittierten Infrarot-Strahlen durchgeführt werden.

Die erfindungsgemäßen Massen lassen sich durch weitere Zusätze modifizieren. Geeignete Zusatzstoffe sind u.a. Weichmacher, Öle, Teere, Asphalte, Bitumina, Lösungsmittel, Farbstoffe, Pigmente, Thixotropiermittel, anorganische und/oder organische Füllstoffe und Faser-, Netz- und Verlaufmittel. Ferner können ihnen Stabilisatoren und/oder Inhibitoren zugesetzt werden.

Besondere Verarbeitungsformen sind bei den polymeren Massen Verdünner und/oder Weichmacher gegeben, wenn sie im festen Aggregatzustand vorliegen. Diese lassen sich entweder aus ihren Lösungen, Dispersionen und/oder Suspensionen in inerten Lösungsmitteln einschließlich Wasser oder aus ihren Schmelzen verarbeiten.
Die mittels Wärme plastifizierten und/oder geschmolzenen erfindungsgemäßen Polymeren können mit bekannten Verfahren mittels Spritzen, Pressen, Gießen, Kalandrieren und/oder Extrudieren verarbeitet werden. Mit Hilfe dieser Technologien lassen sich geformte Gegenstände, Filme, Folien, Profile und/oder Schläuche herstellen.

Gegenstand der Erfindung ist weiterhin die Verwendung der oben beschriebenen Massen zum hydrophoben und/oder abhäsiven Ausrüsten von anorganischen, metallorganischen und/oder organischen Stoffen, zur Herstellung von bahnförmigem, flächigem, hydrophobem und/oder abhäsivem Film- und Folienmaterial, als Verdünnungsmittel und/oder Weichmachungsmittel in metallorganischen und/oder organischen Massen sowie zur Ausbildung einer inerten Schutzschicht bei radikalischen, strahlen- und photochemischen Härtungs- und Vernetzungsreaktionen. Diese hydrophoben und/oder abhäsiven Massen, Verdünner und/oder Weichmacher können in vielen Bereichen der Technik, der gewerblichen Wirtschaft, des Handwerks, der Heimwerker eingesetzt werden.

So lassen sich mit den erfindungsgemäßen Massen in den hydrophoben und/oder abhäsiven Eigenschaften verbesserte neue Überzugs-, Beschichtungs-, Anstrichs-, Imprägnier- und/oder Trennmittel herstellen. Durch die Modifikation bestehender Erzeugnisse mit den erfindungsgemäßen Massen lassen sich auch deren hydrophobe und/oder abhäsive Eigenschaften wesentlich verbessern. Weitere erfinderische Merkmale sind, daß die erfindungsgemäßen Massen, Verdünner und/oder Weichmacher aufgrund der eingesetzten methylgruppenreichen Kohlenwasserstoffverbindungen außerordentlich wirtschaftlich und umweltfreundlich sind.

Werden sie aber nur als reaktive Verdünner und/oder Weichmacher in reaktiven Eintopf- und Mehrtopfsystemen eingesetzt, bieten die eingesetzten Kohlenwasserstoffverbindungen und ihre Derivate durch ihre höheren Siedepunkte und Flammpunkte besondere Vorteile und sind gleichzeitig wirtschaftlicher und umweltfreundlicher. So können sie in einer Vielzahl -nach dem heutigen Stand der Technik- von Überzugs-, Beschichtungs-, Anstrichs-, Imprägnier-und/oder Trennmitteln die inerten oder reaktiven, brenn- und/oder unbrennbaren Lösungsmittel substituieren, wodurch diese ebenfalls wirtschaftlicher, umweltfreundlicher und gleichzeitig in ihren hydrophoben und/oder abhäsiven Eigenschaften verbessert werden.

Eine weitere besondere Anwendungsform der eingesetzten Kohlenwasserstoffverbindungen und deren Derivaten ist der Einsatz in additions- und kondensationsvernetzenden Polydimethylsiloxan-Systemen, die als Hydrophobier- und Trennmittel in vielen Bereichen der Technik eingesetzt werden. Diese Hydrophobier- und Trennmittel müssen vielfach mit hohen Anteilen an inerten Lösungsmitteln, wie z.B. Testbenzin, Toluol, Xylol, Chlorkohlenwasserstoff, verdünnt werden, damit sie applizierbar werden.

Sie können aber auch als reaktive Weichmacher in Polysiloxansystemen eingesetzt werden. Beim Einsatz in polysiloxanhaltigen Dichtstoffen wird u.a., wie überraschenderweise gefunden wurde, die Überstreichbarkeit mit Anstrichmitteln erheblich verbessert.

Diese inerten Lösungsmittel als Verarbeitungshilfen können nun gänzlich durch einen oder mehrere niedermolekulare, reaktive Verdünner, gemäß vorliegender Erfindung, substituiert werden. Da sich der Verdünner mit seinem hohen Gehalt an Methylgruppen pro Molekül in die vernetzte Matrix einbaut, werden gleichzeitig die hydrophoben und/oder abhäsiven Eigenschaften merklich verbessert.

Beim Einsatz als Trennmittel beim Beschichten von flächigen Substratbahnen aus Papier, Kunststoffen, Textilien, Metallen und dgl. zur abhäsiven Ausrüstung ist eine weitere besondere Anwendungsform gemäß vorliegender Erfindung gegeben. Als Reaktionspartner mit den additions- und kondensationsvernetzenden Polydimethylsiloxanen können die eingesetzten Kohlenwasserstoffe und deren Derivate nicht nur die Funktion eines Verdünners übernehmen, sondern auch über deren Gehalt an Methylgruppen lassen sich die abhäsiven Eigenschaften -gemessen in Trennkräften gegenüber klebrigen Massengraduell einstellen. Da sie als Reaktionspartner gleichzeitig ein Lieferant der unpolaren Methylgruppen sind, können sogar hohe Anteile an den Polydimethylsiloxanen substituiert und zusätzlich die abhäsiven Eigenschaften verbessert werden. Durch die Elimination der inerten Lösungsmittel durch die erfindungsgemäßen reaktiven Verdünner werden diese Trennmittelsysteme nicht nur wirtschaftlicher und umweltfreundlicher, sondern sie können auch bei niederen Temperaturen, z.B. unter 100° C vernetzt werden. Dadurch werden auch thermosensible Kunststoffbahnen mit den erfindungsgemäßen abhäsiven Mitteln ausrüstbar. Insgesamt läßt sich dadurch auch die Beschichtungstechnologie günstiger gestalten, weil die Entsorgungsprobleme stark reduziert werden.

Beim freiradikalischen und strahlenchemischen Härten und Vernetzen von ungesättigten Verbindungen, wie z.B. ungesättigte Polyesterharze, Acryl-, Methacryl- und Allylverbindungen, schaffen erfindungsgemäß die Kohlenwasserstoffverbindungen und deren Derivate bei einem ausreichend hohen Methylgruppengehalt eine inerte Schutzschicht gegenüber sauerstoffhaltigen Atmosphären. Dadurch wird das Inhibieren der Reaktion durch Sauerstoff unterbunden und es entstehen klebfreie Oberflächen. Die Zusatzmengen können dabei unter 10 % -bezogen auf den Gehalt an reaktiven Verbindungen- liegen. Als Schutzmittel werden sie gleichzeitig in die Kunststoffmatrix integriert. Diese Tatsache ist besonders für strahlenhärtbare Erzeugnisse von aktuellem Interesse, weil dadurch beim Härten auf eine Schutzgasatmosphäre und/oder den Zusatz von Synergisten verzichtet werden kann.

Eine weitere besondere Anwendungsform vorliegender Erfindung ist die Herstellung von selbsttragenden Filmen und Folien mit spezifischen hydrophoben und/oder abhäsiven Eigenschaften aus den eingesetzten polymeren Kohlenwasserstoffverbindungen und deren Derivaten. Mit ihnen lassen sich hydrophobe und/oder schmutzabweisende Folien für das Bauwesen, abhäsive Trennfolien zum Abdecken und Verpacken von klebrigen Massen und Substraten, wie Haftkleber, Klebefilme und -bänder, erzeugen, die neben verbesserten Eigenschaften, wirtschaftlicher und umweltfreundlicher sind.

Aber auch zum Imprägnieren und zur Hydrophobausrüstung von Naturstoffen, wie Cellulosefasern, Holzspäne, sind die erfindungsgemäßen Verbindungen geeignet. So lassen sich damit, wie überraschenderweise gefunden wurde, auch die Holzspäne für die Spanplattenherstellung hydrophob ausrüsten. Diese Funktion erfüllen im Gegensatz hierzu die gesättigten Isoparaffine (siehe Adhäsion Heft 4/1983) nicht. Es liegt deshalb nahe, daß sich die eingesetzten Verbindungen an den Abbindereaktionen der Polykondensations- oder Polyadditions-Leime beteiligen.

In der industriellen Technik, im Gewerbe-, Handwerks- und Heimwerkerbereich gibt es eine Vielzahl weiterer Verwendungsmöglichkeiten für die hydrophoben und/oder abhäsiven Massen, Verdünner und/oder Weichmacher gemäß vorliegender Erfindung, die im einzelnen nicht erörtert werden können.

Gemäß dieser vorliegenden Erfindung werden nicht nur neue und verbesserte hydrophobe und/oder abhäsive Massen, Verdünner und/oder Weichmacher bereitgestellt, die nicht mit den geschilderten und anderen Nachteilen behaftet sind, sondern sie weisen eine Reihe zusätzlicher verarbeitungs- und anwendungstechnischer Vorteile auf, die seitens der Praxis seit langem gefordert werden. Diese Vorteile sind in Abhängigkeit der jeweiligen eingesetzten Kohlenwasserstoffverbindung oder eines ihrer Derivate u.a. folgende:
- Schaffung neuer hydrophober und/oder abhäsiver Massen,
- Verbesserung der hydrophoben und/oder abhäsiven Eigenschaften durch Mitverwendung der erfindungsgemäßen Massen in Erzeugnissen nach dem Stand der Technik,
- Substitution von handelsüblichen hydrophoben und/oder abhäsiven Stoffen durch die erfindungsgemäßen Massen,
- Substitution von konventionellen reaktiven oder inerten Verdünnern und/oder Weichmachern durch einen oder mehrere der erfindungsgemäßen Verdünner und/oder Weichmacher,
- Verringerung und/oder Beseitigung von physiologischen und toxikologischen Bedenklichkeiten und/oder Umweltproblemen beim Einsatz und/oder Substitution von gefährlichen Arbeitsstoffen durch die erfindungsgemäßen Massen, Verdünner und/oder Weichmacher und
- höhere Wertschöpfung und Wirtschaftlichkeit.

Die Erfindung wird durch die folgenden Beispiele näher erläutert, ohne jedoch darauf beschränkt zu sein.

Die in den Beispielen verwendeten Mengenangaben und -verhältnisse beziehen sich im allgemeinen auf das Gewicht (Gewichtsteile = GT).

Folgende Monomere, Oligomere und Polymere gelangten zum Einsatz:

| | | |
|---|---|---|
| Monomer 1: | 2,3-Dimethylbuten-2 | |
| Monomer 2: | 2,3-Epoxy-2,3-Dimethylbutan | |
| Oligomer 1: | Oligomergemisch aus 2,3-Dimethylbuten-2 (40%), 3-Methylbuten-2 (45%), Buten 2 (15%) und 2-Methylpropen-1 (5%) | |
| | C-Zahl: | C₁₄-C₂₀ |
| | Kettenverzweigung: | 3,5 bis 4,0 Mol Methylgruppen/Molekül obiger Monomere |
| | Dichte in g/cm³: | 0,817 |
| | Viskosität/50° C: | 3,5 mm²/s |
| | Flammpunkt: | 112° C |
| | Siedeverlauf: | Siedebeginn: 255° C |
| | | Siedeende: 280° C |
| | Doppelbindungen: | 2 |
| Polymer 1: | Niedermolekulares Polymer aus Oligomer 1 hergestellt | |
| | C-Zahl: | 80% C₆₀₋₆₅ |
| | | 20% C₃₀ |
| | Kettenverzweigung: | 2,0 Mol Methylgruppen pro C-C-Einheit |
| | Viskosität: | 2050 mPa.s |
| | Dichte/15° C: | 0,892 |
| | Flammpunkt: | 203° C |
| | Doppelbindungen: | 1 |

### Beispiel 1 und 2

Folgende additionsvernetzende Silikontrennmittel wurden hergestellt und damit Beschichtungen durchgeführt:

| | Beispiele | | Vergleich |
|---|---|---|---|
| | 7 | 8 | |
| Vinylpolydimethylpolysiloxan Viskosität 5.000 mPa.s | 50 | 70 | 100 |
| Oligomer 1 (reaktiver Verdünner) | 50 | 30 | - |
| Vernetzer (Wasserstoffsiloxan) | 3 | 3 | 3 |
| Katalysator (Hexachloroplatin(IV)-säure) | 0,4 | 0,4 | 0,4 |
| Viskosität/20° C mPa.s | 300 | 400 | 500 |

| Substrat: satiniertes Papier, 67 g/m² | | | |
|---|---|---|---|
| Auftragsgewicht g/m² | 2-3 | 2-3 | 2-3 |
| Härtungszeiten 100° C sec. | 30 | 30 | 60 |
| Härtungszeiten 120° C sec. | 8 | 8 | 15 |
| Trennkräfte FINAT No. 10 mN/cm | 85 | 87 | 87 |
| Restklebrigkeit FINAT No. 11 % | 94 | 95 | 95 |

Dieses Beispiel zeigt, daß durch Zusatz eines erfindungsgemäßen reaktiven Verdünners der Polysiloxangehalt bei gleichbleibenden Endeigenschaften reduziert werden kann.

### Beispiel 3

Folgende Textilien-Imprägniermittel wurden hergestellt:

| | Beispiel 9 | Vergleich |
|---|---|---|
| Hydroxylgruppenmodifiziertes Methylwasserstoffpolysiloxan | 5 | 5 |
| Oligomer 1 | 95 | - |
| Methylenchlorid | - | 95 |
| Dibutylzinndilaurat, 10%ig (Härter) | 20 | 20 |

Mit diesem Imprägniermittel wurden Leinengewebe behandelt und im Vergleichsbeispiel das Lösungsmittel "Methylenchlorid" durch Verdampfen entfernt. Beide Stoffbahnen wurden dann mit feinen Wassertröpfchen besprüht und dann senkrecht aufgehängt. Während beim Vergleichsbeispiel die feinen Wassertröpfchen stehen blieben, perlten sie auf dem erfindungsgemäßen Imprägniermittel ab.

### Beispiel 4

Ein Methylwasserstoffpolydimethylsiloxan mit einer Viskosität von 150 - 300 mm² s⁻¹/25° C und einem mittleren Molekulargewicht von 2500 wurde als Bautenschutzmittel ausgewählt. Das Methylwasserstoffpolydimethylsiloxan wurde im Oligomer 1 und zum Vergleich in Testbenzin S gelöst und mit dem Oligomer 1 auf eine applikationsgerechte Konzentration verdünnt.

| | Beispiel 10 | | | Vergleich | | |
|---|---|---|---|---|---|---|
| | a | b | c | a | b | c |
| Polydimethylsiloxan | 3 | 5 | 10 | 5 | 10 | 12 |
| Oligomer 1 (reaktiver Verdünner) | 97 | 95 | 90 | - | - | - |
| Testbenzin S | - | - | - | 95 | 90 | 88 |
| Katalysator (Dibutylzinndiacetat) | 2 | 2 | 2 | 2 | 2 | 2 |

Mit diesen Bautenschutzmitteln wurden Betonblöcke (Bn 150) satt imprägniert. Die Betonblöcke wurden vor und nach der 4-wöchigen Wasserlagerung gewogen.
Die Wasseraufnahme betrug:
a) erfindungsgemäß:
   a) 0,20% des Trockengewichtes
   b) 0.15% des Trockengewichtes
   c) 0.11% des Trockengewichtes
b) Vergleich:
   a) 0,90% des Trockengewichtes
   b) 0,50% des Trockengewichtes
   c) 0,30% des Trockengewichtes

Die Wasseraufnahme des unbehandelten Betonblocks betrug ca. 12% des Trockengewichtes. Da sich das Oligomer 1 als reaktiver Verdünner mit dem Methylwasserstoffpolydimethylsiloxan partiell umsetzt, werden gleichzeitig bei einem reduzierten Einsatz an Bautenschutzmittel nicht nur die Hydrophobiereigenschaften verbessert, sondern es treten während der Applikation auch keine umweltbelastende Lösungsmitteldämpfe im Vergleich zu Testbenzin S auf.

### Beispiel 5

Es wurden folgende unter Wasserausschluß lagerfähige Organopolysiloxan-Formmassen hergestellt:

| | Beispiel 11 | | | Vergleich | | |
|---|---|---|---|---|---|---|
| | a | b | c | a | b | c |
| α-w-Dihydroxypolydimethylsiloxan Viskosität: 50.000 mPa.s | 50 | 70 | 90 | 50 | 70 | 90 |
| Oligomer 1 | 50 | 30 | 10 | - | - | - |
| Silikonöl (Polydimethylsiloxan) | - | - | - | 50 | 30 | 10 |
| Kreide | 20 | 20 | 20 | 20 | 20 | 20 |
| Kieselsäure,kolloid,BET 150m²/g | 5 | 5 | 5 | 5 | 5 | 5 |
| Titandioxid | 1 | 1 | 1 | 1 | 1 | 1 |
| Dibutylzinnacetat | 0,8 | 0,8 | 0,8 | 0,7 | 0,7 | 0,7 |
| Di-N-methylbenzamido-methylethoxy-silan | 5,0 | 5,0 | 5,0 | 5,0 | 5,0 | 5,0 |

Die Masse wurde nach den bekannten Verfahren in einem Planetenmischer hergestellt und im Vakuum entgast. Mit den beiden Formenmassen wurden Stahlbleche in einer Schichtstärke von 3 mm beschichtet und 3 Tage im Normklima ausgehärtet. Danach wurden sie mit einem Lack auf Alkydharzbasis (Vor- und Decklack) überstrichen.
Die Lackhaftung (Boeing-Test gemäß ASTM D 3359-70) war beim erfindungsgemäßen Zusatz von Oligomer 1 gut, während im Vergleichsbeispiel keine Haftung gegeben war.

### Beispiel 6

100 GT eines Silikonacrylates, ^{*)} Viskosität 2.000 mPa.s/25° C wurde mit 50 GT Acrylsäure-2-Hydroxy-1,1,2-Trimethylpropylester und 10 GT Acrylamid verdünnt. Anschließend wurde diese Menge geteilt und damit Strahlen- und photochemische Härtungen mit den damit beschichteten Substraten durchgeführt. Der photochemisch härtbaren Masse wurden 5% Diethoxyacetophenon, 2% Benzophenon und 2% eines Amin-Synergisten zugesetzt. Folgende Substrate wurden beschichtet:

| Substrate | Auftragsstärke »m | ES-Dosis Mrd | IV-Härtung Lampe 80W/cm Sekunden |
|---|---|---|---|
| Papier, 67 g/m² | 2 | 3 | 5 |
| Weich-PVC-Folie, 100 »m | 1 | 2 | - |
| OPP-Folie, 40 »m | 1 | 1 | - |
| Stahlblech, gesandstrahlt | 30 | 5 | 15 |

Alle ausgehärteten Beschichtungen zeigten gute hydrophobe und abhäsive Eigenschaften. Ihre Werte waren nicht schlechter als beim reinen Silikonacrylat.

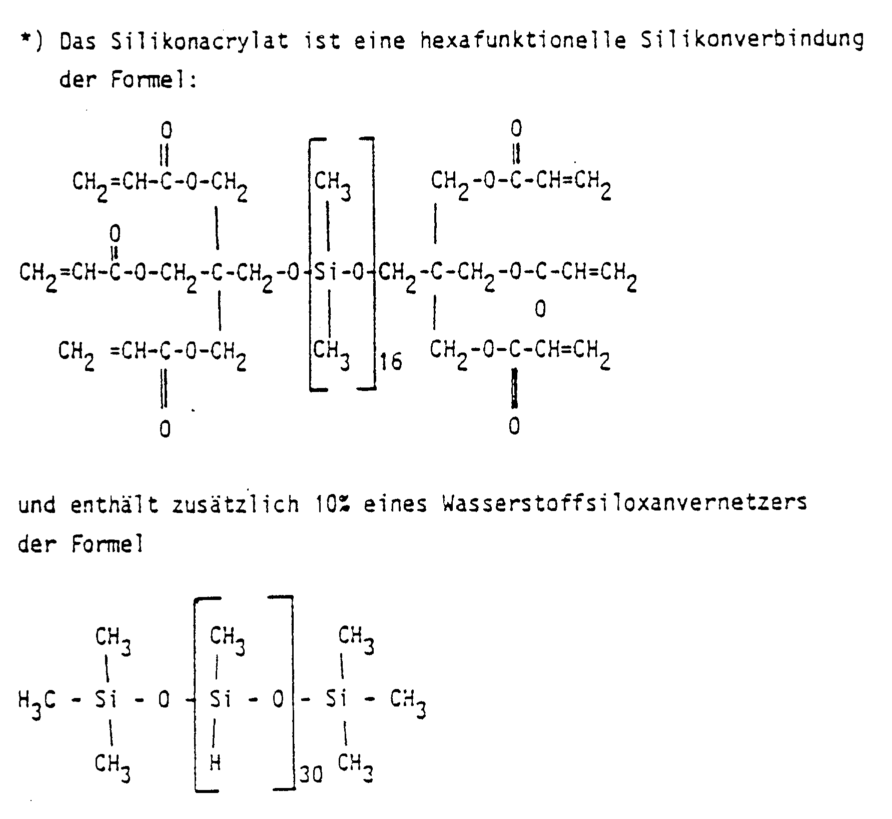

## Patentansprüche

1. Hydrophobe und/oder abhäsive Masse auf anorganischer, metallorganischer und/oder organischer Grundlage, reaktive Verdünner und Weichmacher, **gekennzeichnet durch** einen Gehalt an einer monomeren, oligomeren und/oder polymeren methylgruppenreichen Kohlenwasserstoffverbindung und/oder deren Derivaten der allgemeinen Formeln I, II und/oder III 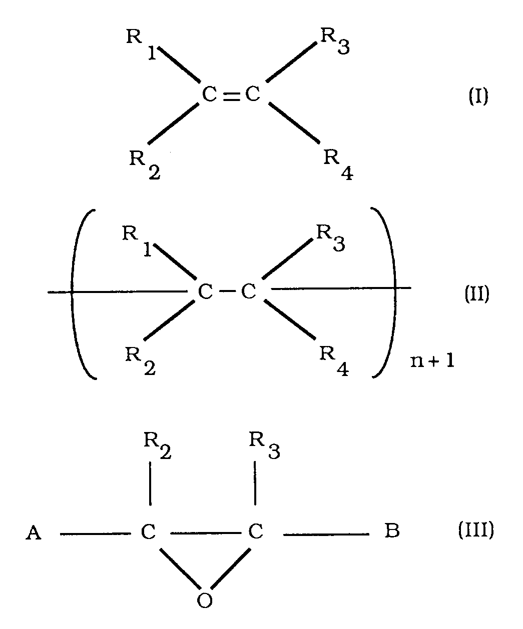 worin
R₁, R₂, R₃ und R₄ Wasserstoffatome, CH₃-Gruppen und/oder C₂H₅-Gruppen, A und B Wasserstoffatome, CH₃-Gruppen und/oder C₂H₅-Gruppen und/oder Reste der allgemeinen Formel (II) und
n eine ganze Zahl mit einem Wert zwischen 0 und 20.000.000, vorzugsweise 50 bis 1.000.000, insbesondere 50 bis 500.000 enthält
mit der Maßgabe bedeuten, daß der Methylgruppengehalt 3,0 bis 4,0 pro Monomer oder Monomereinhelt beträgt; und
an einer metallorganischen Verbindung des Siliciums, wobei das Verhältnis von metallorganischer Verbindung des Siliciums zur Kohlenwasserstoffverbindung 99 : 1 bis 1 : 99 beträgt.

2. Masse, Verdünner und/oder Weichmacher nach Anspruch 1, **dadurch gekennzeichnet,** daß als methylgruppenreiche Kohlenwasserstoffverbindung monomere, oligomere, polymere und/oder copolymere β-Olefine enthalten sind.

3. Masse, Verdünner und/oder Weichmacher nach Anspruch 1 und 2, **dadurch gekennzeichnet,** daß als methylgruppenreiche Kohenwasserstoffverbindung monomere, oligomere, polymere und/oder copolymere β-Olefine mit mindestens einer Epoxidgruppe enthalten sind.

4. Masse, Verdünner und/oder Weichmacher nach einem der Ansprüche 1 bis 3, **dadurch gekennzeichnet,** daß die Comonomere der copolymeren β-Olefine für die radikalische, ionische, koordinative, strahlen- und/oder photochemische Polymerisation mindestens eine reaktionsfähige C-C-Doppelbindung und/oder C-C-Dreifachbindung im Molekül besitzen.

5. Masse, Verdünner und/oder Weichmacher nach einem der Ansprüche 1 bis 4, **dadurch gekennzeichnet,** daß die copolymeren β-Olefine als Comonomere Alkene, Cycloalkene, Arylalkene, Polyene, Allene, Arene, Arine, insbesondere allyl-, vinyl-, acryl- und/oder methacrylgruppenhaltige Verbindungen enthalten.

6. Masse, Verdünner und/oder Weichmacher nach einem der Ansprüche 1 bis 5, **dadurch gekennzeichnet,** daß als Derivate der methylgruppenreichen Kohlenwasserstoffverbindungen der allgemeinen Formeln I, II und/oder III copolymere Derivate, welche durch Polymerisation mit Comonomeren mit mindestens einer reaktionsfähigen C-C-Doppelbindung und/oder C-C-Dreifachbindung, durch Polyaddition mit aktive Wasserstoffatome tragenden Verbindungen und/oder durch Polykondensation mit polykondensationsfähige Hydroxylgruppen tragenden Verbindungen, organischen Siliciumverbindungen und/oder anorganischen, hydraulisch abbindenden Verbindungen erhalten worden sind, enthalten sind.

7. Masse, Verdünner und/oder Weichmacher nach Anspruch 6, **dadurch gekennzeichnet,** daß
a) als copolymerisierbare Comonomere Alkene, Cycloalkene, Arylalkene, Polyene, Allene, Arene, Arine, und noch bevorzugter allyl-, vinyl-, acryl- und/oder methacrylgruppenhaltige Verbindungen.
b) als aktive Wasserstoffatome tragende Verbindungen Amine, Amide, Amidoamine, Imine, Imide, ein- oder mehrbasige gesättigte und/oder ungesättigte Säuren bzw. deren Anhydride und/oder Siliciumwasserstoffverbindungen, und
c) als polykondensationsfähige, Hydroxylgruppen tragende Verbindungen ein-oder mehrwertige Alkohole, Mono-, Di- oder Polycarbonsäuren und deren Anhydri de und/oder aliphatische oder aromatische Methylolverbindungen, enthalten sind.

8. Masse, Verdünner und/oder Weichmacher nach einem der Ansprüche 1 bis 7, **dadurch gekennzeichnet,** daß als metallorganische Verbindung des Siliciums unverzweigte, verzweigte und/oder cyclische Silane, Silanole, Polysilane, Polyorganosiloxane, Polysilazane, Polysilthian, Polysilakenyle, Polysilarylene, Polysilalkensiloxane, Polysilarylensiloxane, Polysilalkensilane, Polysilarylensilane mit mindestens einer silicium- und/oder organofunkionellen Gruppe, wobei diese vorzugsweise Gruppen der Formeln
〉̶Si-H ,
〉̶Si-OH ,
〉̶Si-Halogen ,
〉̶Si-SH ,
-CH=CH₂
und/oder 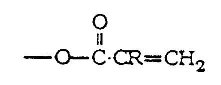 bedeutet, worin Halogen, Chlor, Brom, Jod und/oder Fluor und R ein Wasserstoffatom oder eine Alkylgruppe mit 1 bis 4 Kohlenstoffatomen darstellen, enthalten sind.

9. Masse, Verdünner und/oder Weichmacher nach mindestens einem der Ansprüche 1 bis 8, **dadurch gekennzeichnet,** daß sie zusätzlich hydraulisch abbindende Verbindungen, insbesondere Zemente oder Silikate enthält.

10. Verwendung der Masse nach einem der Ansprüche 1 bis 9 zum hydrophoben und/oder abhäsiven Ausrüsten von anorganischen, metallorganischen und/oder organischen Stoffen, zur Herstellung von bahnförmigem, flächigem, hydrophobem und/oder abhäsivem Film- und Folienmaterial, als Verdünnungsmittel und/oder Weichmachungsmittel in metallorganischen und/oder organischen Massen sowie zur Ausbildung einer inerten Schutzschicht bei radikalischen, strahlen- und photochemischen Härtungs- und Vernetzungsreaktionen.

## Claims

1. A hydrophobic and/or abhesive mass on an inorganic, organometallic and/or organic basis, reactive diluents and plasticizers, **characterized by** containing a monomeric, oligomeric and/or polymeric hydrocarbon rich in methyl groups and/or derivatives thereof of the general formulae I, II and/or III 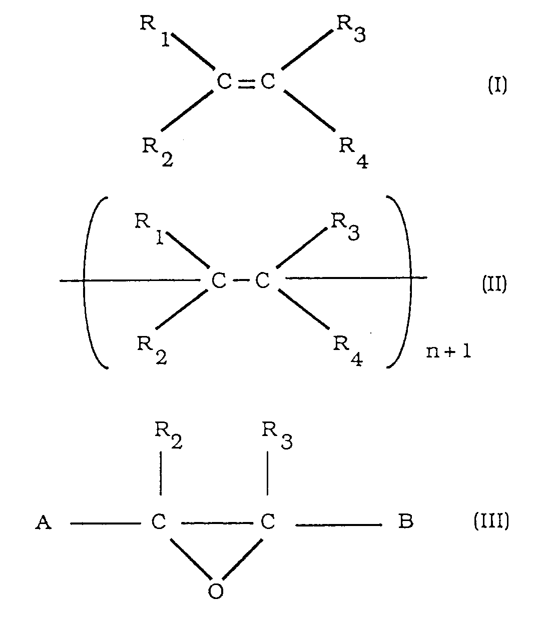 wherein
R₁, R₂, R₃ and R₄ denote hydrogen atoms, CH₃ groups and/or C₂H₅ groups,
A and B denote hydrogen atoms, CH₃ groups and/or C₂H₅ groups and/or residues of the general formula (II) and
n denotes an integer having a value between 0 and 20,000,000, preferably 50 to 1,000,000, specifically 50 to 500,000,
with the proviso that the content of methyl groups is 3.0 to 4.0 per monomer or monomer unit; and
by containing an organometallic silicon compound, the ratio of the organometallic silicon compound and the hydrocarbon being 99 : 1 to 1 : 99.

2. The mass, diluents and/or plasticizers according to claim 1, **characterized in that** the hydrocarbon contained therein which is rich in methyl groups comprises monomeric, oligomeric, polymeric and/or copolymeric β-olefins.

3. The mass, diluents and/or plasticisers according to claims 1 and 2, **characterized in that** the hydrocarbon contained therein which is rich in methyl groups comprises monomeric, oligomeric, polymeric and/or copolymeric β-olefins having at least one epoxide group.

4. The mass, diluents and/or plasticizers according to one of claims 1 to 3, **characterized in that** the comonomers of the copolymeric β-olefins for the radical, ionic, coordinating, radiation-chemical and/or photochemical polymerization have at least one reactive C-C double bond and /or C-C triple bond in the molecule.

5. The mass, diluents and/or plasticizers according to one of claims 1 to 4, **characterized in that** the copolymeric β-olefins contain, as comonomers, alkenes, cycloalkenes, aryl alkenes, polyenes, allenes, arenes, arines, specifically compounds containing allyl-, vinyl-, acryl- and/or methacryl groups.

6. The mass, diluents and/or plasticizers according to one of claims 1 to 5, **characterized in that** the derivatives contained therein of the hydrocarbons rich in methyl groups of the general formulae I, II and/or III are copolymeric derivatives that have been obtained by polymerization with comonomers having at least one reactive C-C double bond and/or C-C triple bond, by polyaddition with compounds carrying active hydrogen atoms and/or by polycondensation with compounds carrying polycondensable hydroxyl groups, organosilicon compounds and/or inorganic, hydraulic setting compounds.

7. The mass, diluents and/or plasticizers according to claim 6, **characterized by** containing, a) as copolymerizable comonomers: alkenes, cycloalkenes, aryl alkenes, polyenes, allenes, arenes, arines, and more preferably compounds containing allyl-, vinyl-, acryl- and/or methacryl groups, b) as compounds carrying active hydrogen atoms: amines, amides, amidoamines, imines, imides, mono- or poly-basic saturated and/or unsaturated acids and anhydrides thereof, respectively, and/or hydrosilicon compounds, and
c) as polycondensable compounds carrying hydroxyl groups: mono- or polyhydric alcohols, mono-, di- or polycarboxylic acids and anhydrides thereof and/or aliphatic or aromatic methylol compounds.

8. The mass, diluents or plasticizers according to one of claims 1 to 7, **characterized in that** the organometallic silicon compound contained therein comprises unbranched, branched and/or cyclic silanes, silanols, polysilanes, polyorganosiloxanes, polysilazanes, polysilathiane, polysilalkenyls, polysilarylenes, polysilalkenesiloxanes, polysilarylenesiloxanes, polysilalkenesilanes, polysilarylenesilanes having at least one silicon-and/or organo-functional group, said group preferably meaning groups of the formulae
〉̶Si-H ,
〉̶Si-OH ,
〉̶Si-Halogen ,
〉̶Si-SH ,
-CH = CH₂
and/or 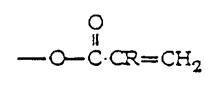 wherein halogen, chlorine, bromine, iodine and/or fluorine and R represent a hydrogen atom or an alkyl group having 1 to 4 carbon atoms.

9. The mass, diluents and/or plasticizers according to at least one of claims 1 to 8, **characterized by** additionally containing hydraulic setting compounds, in particular cements or silicates.

10. Use of the mass according to one of claims 1 to 9 as a hydrophobic and/or abhesive equipment of inorganic, organometallic and/or organic substances, for the production of a sheet-like, flat, hydrophobic and/or abhesive film- and foil material, as diluents and /or plasticizers in organometallic and/or organic masses as well as for the formation of an inert protective layer in radical, radiation-chemical and photochemical hardening and cross-linking reactions.

## Revendications

1. Masse à base minérale, organométallique et/ou organique, diluant réactif et/ou plastifiant, hydrophobes et/ou abhésifs, caractérisés en ce qu'ils comprennent un composé hydrocarboné riche en groupes méthyles, monomère, oligomère et/ou polymère, et/ou les dérivés de celui-ci de formule générale I, II et/ou III 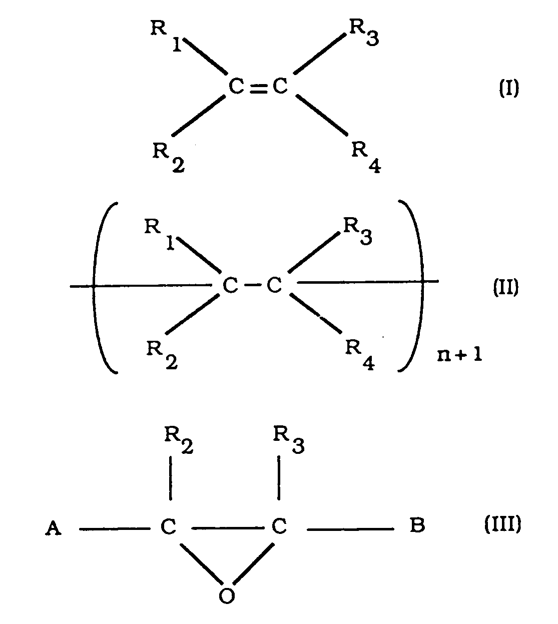 dans lesquelles
R₁, R₂, R₃ et R₄ représentent des atomes d'hydrogène, des groupes CH₃ et/ou des groupes C₂H₅,
A et B représentent des atomes d'hydrogène, des groupes CH₃ et/ou des groupes C₂H₅ et/ou des restes de formule générale II et
n représente un nombre entier ayant une valeur entre 0 et 20.000.000, de préférence 50 et 1.000.000, tout particulièrement entre 50 et 500.000,
sous réserve que la teneur en groupes méthyles soit de 3,0 à 4,0 par monomère ou unité monomère ; et
un composé organométallique du silicium, le rapport du composé organométallique du silicium au composé hydrocarboné étant de 99:1 à 1:99.

2. Masse, diluant ou plastifiant selon la revendication 1, caractérisés en ce qu'ils comprennent en tant que composé hydrocarboné riche en groupes méthyles des β-oléfines monomères, oligomères, polymères et/ou copolymères.

3. Masse, diluant et/ou plastifiant selon la revendication 1 ou 2, caractérisés en ce qu'ils comprennent en tant que composé hydrocarboné riche en groupes méthyles des β-oléfines, monomères, oligomères, polymères et/ou copolymères ayant au moins un groupe époxyde.

4. Masse, diluant et/ou plastifiant selon l'une des revendications 1 à 3, caractérisés en ce que les comonomères du copolymère β-oléfinique comprennent dans la molécule au moins une double liaison C-C et/ou une triple liaison C-C réactive pour la polymérisation radicalaire, ionique, par coordination, par irradiation et/ou photochimique.

5. Masse, diluant et/ou plastifiant selon l'une des revendications 1 à 4, caractérisés en ce que les copolymères β-oléfiniques comprennent en tant que comonomères des alcènes, cycloalcènes, arylalcènes, polyènes, allènes, arènes, arynes, en particulier des composés comprenant des groupes allyle, vinyle, acryle et/ou méthacryle.

6. Masse, diluant et/ou plastifiant selon l'une des revendications 1 à 5, caractérisés en ce qu'ils contiennent en tant que dérivés des composés hydrocarbones riches en groupes méthyles de formule générale I, II et/ou III, des dérivés copolymères obtenus par polymérisation avec des comonomères ayant au moins une double liaison C-C et/ou une triple liaison C-C réactive, par polyaddition avec des composés comportant des hydrogènes actifs et/ou par polycondensation avec des composés comprenant des groupes hydroxyles aptes à une polycondensation, des composés organiques du silicium et/ou des composés minéraux constituant des liants hydrauliques.

7. Masse, diluant et/ou plastifiant selon la revendication 6, caractérisés en ce qu'ils comprennent
a) en tant que comonomères copolymérisables, des alcènes, cycloalcènes, arylalcènes, polyènes, allènes, arènes, arynes et de préférence des composés comprenant un groupe allyle, vinyle, acryle ou méthacryle,
b) en tant que composés comportant des hydrogènes actifs, des amines, amides, amidoamines, imines, imides, mono- ou polyacides saturés ou insaturés ou leurs anhydrides et/ou composés hydrogénosiliciés, et
c) en tant que composés comportant des groupes hydroxyles, aptes à la polycondensation, des alcools mono- ou polyfonctionnels, des mono-, di- ou polyacides carboxyliques et leurs anhydrides et/ou des méthylols aliphatiques ou aromatiques.

8. Masse, diluant et/ou plastifiant selon l'une quelconque des revendications 1 à 7, caractérisés en ce qu'ils comprennent en tant que composés organométalliques du silicium, des silanes, silanols, polysilanes, polyorganosiloxanes, polysilazanes, polysilthianes, polysilalcényles, polysilarylènes, polysilalcénesiloxanes, polysilarylènesiloxanes, polysilalkylènesilanes, polysilarylènesilanes, linéaires, ramifiées et/ou cycliques avec au moins un groupe fonctionnel silicié et/ou organique, dans lesquels ces groupes préférés étant représentés par les formules
〉̶Si-H,
〉̶Si-OH,
〉̶Si-Halogène,
〉̶Si-SH,
-CH=CH₂
et/ou 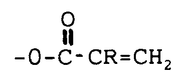 dans lesquelles Halogène représente un atome de chlore, brome, iode et/ou fluor et R un atome d'hydrogène ou un groupe alkyle ayant de 1 à 4 atomes de carbone.

9. Masse, diluant et/ou plastifiant selon l'une au moins des revendications 1 à 8, caractérisés en ce qu'ils comprennent en outre des liants hydrauliques, en particulier des ciments ou des silicates.

10. Utilisation de la masse selon l'une des revendications 1 à 9 pour conférer des propriétés hydrophobes et/ou abhésives à des substances minérales, organométalliques et/ou organiques, pour la fabrication de matériaux en films ou feuilles en forme de rubans, plats, hydrophobes et/ou abhésifs, en tant qu'agent diluant et/ou plastifiant dans des masses organométalliques et/ou organiques ainsi que pour la formation d'une couche de protection inerte, dans des réactions de durcissement et de réticulation radicalaires, par irradiation ou photochimiques.
